# EUROPÄISCHE PATENTSCHRIFT

(11) **EP 2 312 179 B1**
(45) Veröffentlichungstag und Bekanntmachung des Hinweises auf die Patenterteilung: **01.02.2012**
(21) Anmeldenummer: 09013147.5
(22) Anmeldetag: 19.10.2009
(51) Int. Cl.: F16F 7/09, F16F 15/03, D06F 37/20

(54) **Schwingungsdämpfer und dessen Verwendung**
Vibration absorber and its use
Amortisseur d'oscillations et son utilisation

(43) Veröffentlichungstag der Anmeldung: 20.04.2011
(73) Patentinhaber: Carl Freudenberg KG, 69469 Weinheim (DE)
(72) Erfinder: Röhner, Gerhard, 69502 Hemsbach (DE); Mutterer, Heinz, 76532 Baden-Baden (DE)

(56) Entgegenhaltungen:
- US-A- 6 053 291
- US-A- 6 151 930
- US-A1- 2003 075 401

## Beschreibung

### Technisches Gebiet

Die Erfindung betrifft einen Schwingungsdämpfer, umfassend ein erstes Maschinenelement, einen Aktuator und einen Reibkörper, der mit einem zweiten Maschinenelement verbunden und an das erste Maschinenelement anlegbar ist, wobei der Aktuator durch eine Magnetspule ansteuerbar ist.

### Stand der Technik

Derartige Schwingungsdämpfer sind allgemein bekannt. Der Aktuator kann dabei mit einer magnetorheologischen Flüssigkeit gefüllt sein, so dass bei Ansteuerung durch die Magnetspule die mittels einer Kolbenstange eingeleiteten Schwingungen gedämpft werden. Ein solcher Schwingungsdämpfer ist teuer und konstruktiv aufwendig. Die magnetorheologische Flüssigkeit ist teuer, muss gegenüber der Umgebung abgedichtet werden, und zur Schwingungsdämpfung sind hohe elektrische Spannungen erforderlich.

Aus der gattungsbildenden US-A-6 053 291, Fig. 9, ist ein Schwingungsdämpfer bekannt, umfassend ein erstes Maschinenelement, einen Aktuator und einen Reibkörper, der mit einem zweiten Maschinenelement verbunden und an das erste Maschinenelement anlegbar ist, wobei der Aktuator durch eine Magnetspule ansteuerbar ist. Der Aktuator und der Reibkörper sind einstückig und materialeinheitlich ausgebildet und durch einen elastisch nachgiebigen Magnetkörper gebildet.

Ein weiterer Schwingungsdämpfer ist aus der US 2003/075401 A1 bekannt. Der Schwingungsdämpfer umfasst einen elastischen Magnetkörper, der auf der dem ersten Maschinenelement zugewandten Seite durch einen Reibkörper außenumfangsseitig umschlossen ist. Eine Magnetspule umschließt den Magnetkörper und den Reibkörper außenumfangsseitig.

### Darstellung der Erfindung

Der Erfindung liegt die Aufgabe zu grunde, einen Schwingungsdämpfer der eingangs genannten Art derart weiterzuentwickeln, dass dieser einen sehr einfachen Aufbau aufweist, sehr kostengünstig herstellbar ist und dadurch auch in technischen Geräten zur Anwendung gelangen kann, die in sehr großen Stückzahlen hergestellt werden. Außerdem soll der Schwingungsdämpfer auch In einer Umgebung mit hoher Luftfeuchtigkeit gleichbleibend gute Gebrauchseigenschaften während einer langen Gebrauchsdauer aufweisen.

Diese Aufgabe wird erfindungsgemäß Jeweils durch einen Schwingungsdämpfer gemäß den Patentansprüchen 1 und 2 gelöst. Auf vorteilhafte Ausgestaltungen nehmen die darauf rückbezogenen Unteransprüche Bezug.
Außerdem ist eine besondere Verwendung beansprucht.

Zur Lösung der Aufgabe ist nach einer ersten Ausgestaltung ein Schwingungsdämpfer vorgesehen, bei dem der Aktuator und der Reibkörper einstückig und materialeinheitlich ausgebildet und durch einen Magnetkörper gebildet sind, der von der Magnetspule aussenumfangsseitig umschlossen ist, wobei das erste Maschinenelement und/oder das zweite Maschinenelement aus einem polymeren Werkstoff bestehen. Der Aktuator bildet gleichzeitig den Reibkörper, der Reibkörper gleichzeitig den Aktuator. Durch die Zusammenfassung des Aktuators und des Reibkörpers in nur einem Bauteil, nämlich dem Magnetkörper, weist der beanspruchte Schwingungsdämpfer insgesamt nur sehr wenige Bauteile auf. Der Schwingungsdämpfer ist dadurch besonders einfach und sehr kostengünstig herstellbar und kann deshalb auch zur Schwingungsdämpfung in Maschinen zur Anwendung gelangen, die in großen Stückzahlen hergestellt werden.

Gemäß einer zweiten Ausgestaltung ist es zur Lösung derselben Aufgabe vorgesehen, dass der Aktuator durch einen Magnetkörper gebildet ist, der auf der dem ersten Maschinenelement zugewandten Seite von einem Reibkörper umschlossen ist, wobei der Magnetkörper und der Reibkörper von der Magnetspule außenumfangsseitig umschlossen sind, wobei das erste Maschinenelement und/oder das zweite Maschinenelement aus einem polymeren Werkstoff bestehen. Im Vergleich zu einem Aktuator der eingangs beschriebenen Art, der eine magnetorheologische Flüssigkeit umfasst, ist der aus einem Magnetkörper bestehende Aktuator einfach und kostengünstig herstellbar. Der Reibkörper, der zur Dämpfung der Schwingungen an das erste Maschinenelement anlegbar ist, kann den jeweiligen Gegebenheiten des Anwendungsfalles besonders gut angepasst werden. Dadurch, dass der Reibkörper, bezogen auf den Magnetkörper, separat hergestellt ist, kann er beispielsweise hinsichtlich seines Reibverhaltens und/oder seiner Haltbarkeit an den jeweiligen Anwendungsfall gut angepasst werden.

Das erste Maschinenelement und/oder das zweite Maschinenelement bestehen aus einem polymeren Werkstoff. Das Dämpfergehäuse kann als Zylinderrohr ausgebildet sein. Derartige Bauteile sind rostfrei und einfach herstellbar. Gelangt der Schwingungsdämpfer beispielsweise in einer Umgebung mit hoher Luftfeuchtigkeit zur Anwendung, verändern sich seine Gebrauchseigenschaften auch während einer langen Gebrauchsdauer nicht. Durch das rostfreie erste Maschinenelement, an das sich der Magnetkörper oder der Reibkörper angelegt, sind gleichbleibende Gebrauchseigenschaften während einer langen Gebrauchsdauer sichergestellt.

Das erste Maschinenelement kann als Dämpfergehäuse oder als Kolbenstange ausgebildet sein und das zweite Maschinenelement als Kolbenstange oder als Dämpfergehäuse. Wenn das erste Maschinenelement als Dämpfergehäuse und das zweite Maschinenelement als Kolbenstange ausgebildet ist, ist der Reibkörper mit der Kolbenstange verbunden und an das Dämpfergehäuse anlegbar. Wenn demgegenüber das erste Maschinenelement als Kolbenstange und das zweite Maschinenelement als Dämpfergehäuse ausgebildet ist, ist der Reibkörper mit dem Dämpfergehäuse verbunden und an die Kolbenstange anlegbar. Diese Ausgestaltungen sind vom jeweiligen Anwendungsfall abhängig.

Der elastisch nachgiebige Magnetkörper kann als Magnetelastomerkörper oder als Magnetschaumkörper ausgebildet sein. In beiden Fällen sind innerhalb des Magnetkörpers ferromagnetische Partikel angeordnet, um die Funktion des Magnetkörpers zu gewährleisten.

Ein Magnetelastomerkörper wird hauptsächlich dann zur Anwendung gelangen, wenn geringe Formänderungen/Verformungswege des Magnetkörpers zur Schwingungsdämpfung ausreichend sind und größere Kräfte zur Schwingungsdämpfung übertragen werden müssen. Demgegenüber kann ein Magnetschaumkörper zur Anwendung gelangen, wenn größere Formänderungen/Verformungswege des Magnetkörpers zur Schwingungsdämpfung erforderlich sind und wenn die Übertragung kleinerer Kräfte für die Schwingungsdämpfung ausreichend ist.

Bei der zweiten Ausgestaltung bilden der Magnetkörper und der Reibkörper bevorzugt eine vormontierbare Einheit. Durch die vormontierbare Einheit ist die Montage des Schwingungsdämpfers gemäß zweiter Ausgestaltung nicht aufwendiger als bei einem Schwingungsdämpfer, bei dem der Aktuator und der Reibkörper entsprechend der ersten Ausgestaltung einstückig und materialeinheitlich ausgebildet und durch den Magnetkörper gebildet sind.

Der Reibkörper weist bevorzugt eine Elastizität auf, die im Wesentlichen der Elastizität des Magnetkörpers entspricht. Für eine gute Funktion des Schwingungsdämpfers ist es entscheidend, dass der Reibkörper den Bewegungen des Magnetkörpers bei seiner Aktivierung und Deaktivierung durch Betätigung der Magnetspule jeweils möglichst unmittelbar zu folgen vermag. Der Einfluss des Reibkörpers auf die Gebrauchseigenschaften des Magnetkörpers ist deshalb vernachlässigbar gering.

Die Magnetspule, der Magnetkörper und der Reibkörper sind bevorzugt jeweils rotationssymmetrisch ausgebildet Die Herstellung der genannten Bauteile ist dadurch einfach und kostengünstig.

Durch den einfachen Aufbau und die kostengünstige Herstellbarkeit des Schwingungsdämpfers ist dieser besonders gut geeignet, auch im Massenmarkt eingesetzt zu werden.

Die Erfindung betrifft außerdem die Verwendung eines Schwingungsdämpfers, wie zuvor beschrieben, in Waschmaschinen. Für diesen Massenmarkt "weiße Ware" ist entscheidend, dass die verwendeten Bauteile einfach und kostengünstig herstellbar sind und trotzdem gute Gebrauchseigenschaften aufweisen. Das ist bei den erfindungsgemäßen Schwingungsdämpfern der Fall, so dass auch einfache und preisgünstige Waschmaschinen mit solchen Schwingungsdämpfern problemlos ausgerüstet werden können.

Die Anbindung des Magnetkörpers an das zweite Maschinenelement kann stoffschlüssig oder kraft- und/oder formschlüssig erfolgen. Der Magnetkörper kann zum Beispiel mit dem zweiten Maschinenelement verklebt sein oder in Form einer Presspassung und/oder durch eine Verkrallung mit dem zweiten Maschinenelement verbunden sein. Die Anbindung kann axial mittig oder im Bereich von zumindest einem stimseitigen Ende des Magnetkörpers erfolgen.

### Kurzbeschreibung der Zeichnung

Drei Ausführungsbeispiele des erfindungsgemäßen Schwingungsdämpfers werden nachfolgend anhand der Figuren 1 bis 6 näher beschrieben. Diese zeigen jeweils in schematischer Darstellung:
- Fig.1: ein erstes Ausführungsbeispiel des erfindungsgemäßen Schwingungsdämpfers mit nicht-angesteuerter Magnetspule,
- Fig. 2: das Ausführungsbeispiel aus Fig. 1 mit angesteuerter Magnetspule,
- Fig. 3: ein zweites Ausführungsbeispiel des erfindungsgemäßen Schwingungsdämpfers mit nicht-angesteuerter Magnetspule,
- Fig. 4: das Ausführungsbeispiel aus Fig. 3 mit angesteuerter Magnetspule,
- Fig. 5: ein drittes Ausführungsbeispiel des erfindungsgemäßen Schwingungsdämpfers mit nicht-angesteuerter Magnetspule,
- Fig. 6: das Ausführungsbeispiel aus Fig. 5 mit angesteuerter Magnetspule.

### Ausführung der Erfindung

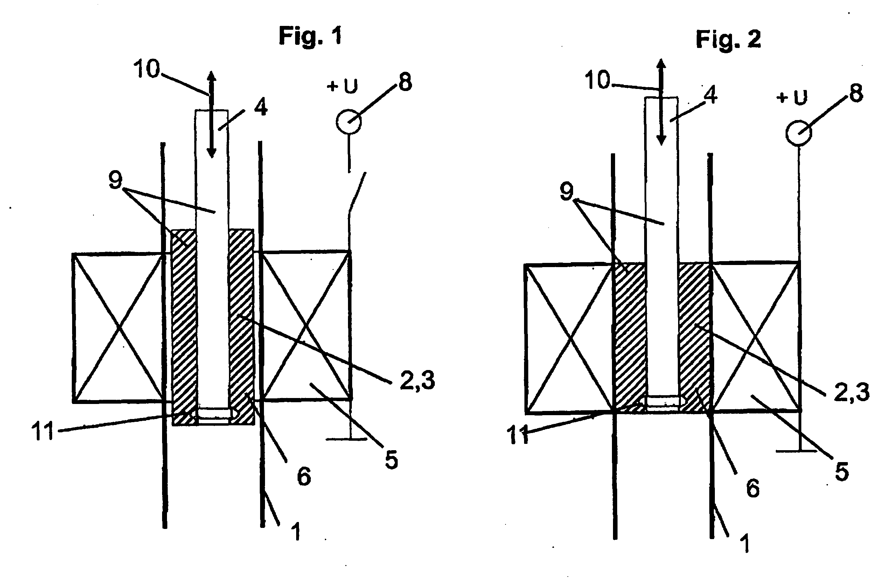

In den Figuren 1 und 2 ist ein erstes Ausführungsbeispiel des erfindungsgemäßen Schwingungsdämpfers mit nicht-angesteuerter (Fig. 1) und angesteuerter Magnetspule 5 (Fig. 2) gezeigt.

Der Schwingungsdämpfer umfasst als erstes Maschinenelement ein Dämpfergehäuse 1 aus einem polymeren Werkstoff, das die Kolbenstange 4 und den auf der Kolbenstange 4 ortsfest angeordneten Magnetkörper 6 umschließt. Der Magnetkörper 6 ist gleichzeitig Aktuator 2 und Reibkörper 3. Das Dämpfergehäuse 1 ist aussenumfangsseitig von der Magnetspule 5 umschlossen, die durch eine elektrische Spannungsquelle 8 ansteuerbar ist.

Der Magnetkörper 6 ist kraft- und/oder formschlüssig mit dem zweiten Maschinenelement, das hier als Kolbenstange 4 ausgebildet ist, verbunden. Die Kolbenstange 4 weist dazu einen außenumfangsseitig umlaufenden Wulst 11 auf, der sich im innenumfang des Magnetkörpers 6 verkralit. Dadurch wird sichergestellt, dass sich die Kolbenstange 4 während der bestimmungsgemäßen Verwendung des Schwingungsdämpfers in axialer Richtung 10 nicht relativ zum Magnetkörper 6 verschiebt; die Kolbenstange 4 und der Magnetkörper 6 sind relativ ortsfest zueinander angeordnet.

In Fig. 1 ist die Magnetspule 5 nicht angesteuert. Die Kolbenstange 4 und der Magnetkörper 6, die im hier gezeigten Ausführungsbeispiel eine weitere vormontierbare Einheit 9 bilden, sind vom Dämpfergehäuse 1 mit radialem Abstand umschlossen und dadurch innerhalb des Dämpfergehäuses 1 in axialer Richtung 10 frei beweglich.

In Fig. 2 ist die Magnetspule 5 durch die elektrische Spannungsquelle 8 angesteuert. Der Magnetkörper 6, der sich innerhalb des Magnetfelds befindet, verkürzt sich dadurch und vergrößert seinen Aussendurchmesser entsprechend, wie hier dargestellt. Der Magnetkörper 6 berührt den Innendurchmesser des Dämpfergehäuses 1 unter radialer Vorspannung anliegend und erzeugt dadurch bei relativer axialer Hin- und Herbewegung Reibung, so dass die eingeleiteten Schwingungen bedämpft werden.

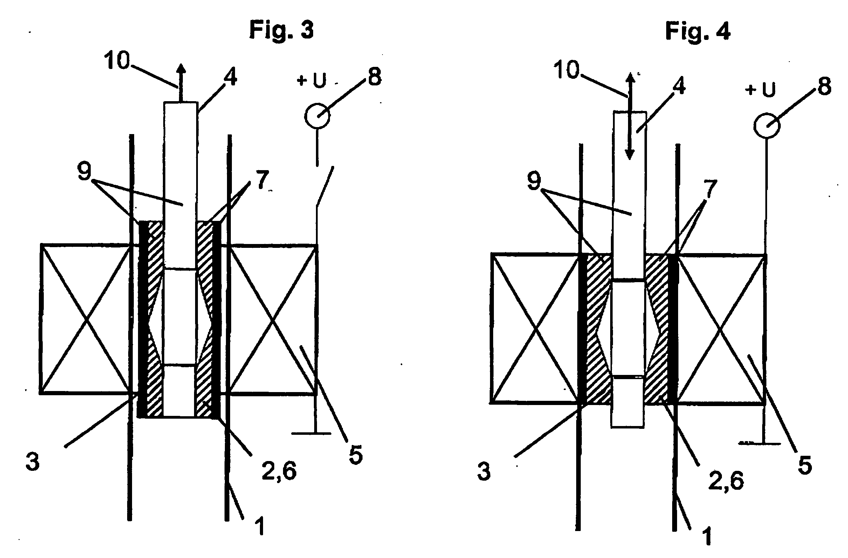

Entsprechend ist die Funktion des zweiten Ausführungsbeispiels gemäß Figuren 3 und 4.

In den Figuren 3 und 4 ist ein zweites Ausführungsbeispiel des erfindungsgemäßen Schwingungsdämpfers gezeigt, das sich vom Ausführungsbeispiel gemäß Figuren 1 und 2 dadurch unterscheidet, dass der Aktuator 2 durch den Magnetkörper 6 gebildet ist, der auf der dem Dämpfergehäuse 1 zugewandten Seite von einem separat erzeugten Reibkörper 3 umschlossen ist. Der Reibkörper 3 kann dadurch unabhängig vom Magnetkörper 6 hinsichtlich seiner Reibeigenschaften und seiner Haltbarkeit an den jeweiligen Anwendungsfall angepasst werden.

Der Magnetkörper 6 und der Reibkörper 3 sind bevorzugt stoffschlüssig miteinander verbunden und bilden die vormontierbare Einheit 7. Zusammen mit der Kolbenstange 4 wird die weitere vormontierbare Einheit 9 gebildet.

Der Reibkörper 3 weist im hier gezeigten Ausführungsbeispiel eine Elastizität auf, die im Wesentlichen der Elastizität des Magnetkörpers 6 entspricht. Die Funktion des Schwingungsdämpfers sowie dessen Betätigung unterscheiden sich von der Funktion und der Betätigung des Schwingungsdämpfers gemäß den Figuren 1 und 2 nicht.

Der Magnetkörper 6 ist, ebenso wie im Ausführungsbeispiel aus den Figuren 1 und 2, kraft- und/oder formschlüssig mit dem zweiten Maschinenelement, dass hier als Kolbenstange 4 ausgebildet ist, verbunden. Die Kolbenstange 4 weist dazu in dem Bereich, in dem sie vom Magnetkörper 6 außenumfangsseitig umschlossen ist, eine sich in axialer Richtung 10 erstreckende, doppelkegelförmige Gestalt 13 auf, die sich im Innenumfang des Magnetkörpers 6 unter radialer Vorspannung verkrallt. Dadurch wird sichergesteilt, dass sich die Kolbenstange 4 während der bestimmungsgemäßen Verwendung des Schwingungsdämpfers in axialer Richtung 10 nicht relativ zum Magnetkörper 6 verschiebt; die Kolbenstange 4 und der Magnetkörper 6 sind relativ ortsfest zueinander angeordnet.

In den Figuren 1 bis 4 ist das Dämpfergehäuse 1 jeweils das erste Maschinenelement und die Kolbenstange 4 jeweils das zweite Maschinenelement.

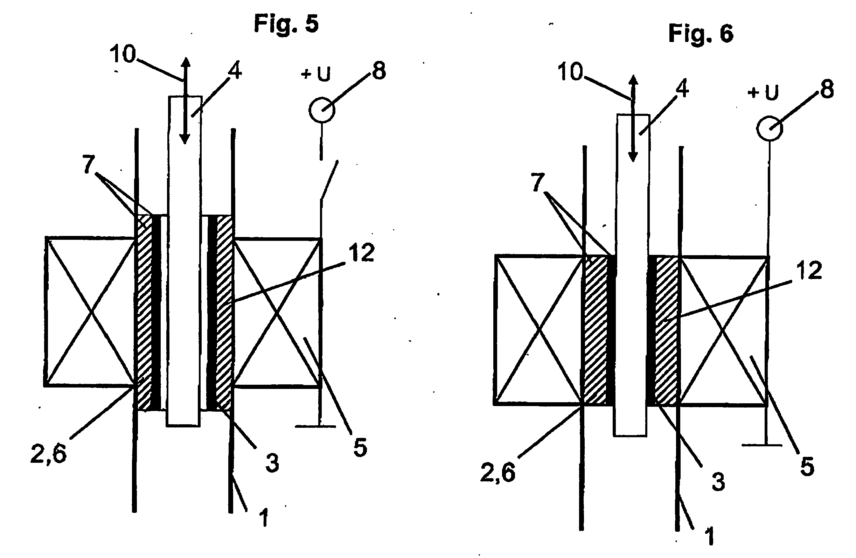

In den Figuren 5 und 6 ist ein drittes Ausführungsbeispiel des erfindungsgemäßen Schwingungsdämpfers gezeigt, ähnlich dem zweiten Ausführungsbeispiel aus den Figuren 3 und 4.

Das Dämpfergehäuse 1 ist in diesem Ausführungsbeispiel das zweite Maschinenelement und die Kolbenstange 4 das erste Maschinenelement

Der Magnetkörper 6 ist stoffschlüssig, durch eine Verklebung 12, mit dem Innenumfang des Dämpfergehäuses 1 verbunden.

Dadurch wird sichergestellt, dass sich der Magnetkörper 6 während der bestimmungsgemäßen Verwendung des Schwingungsdämpfers in axialer Richtung 10 nicht relativ zum Dämpfergehäuse 1 verschiebt; das Dämpfergehäuse 1 und der Magnetkörper 6 sind relativ ortsfest zueinander angeordnet

In Fig. 5 ist die Magnetspule 5 nicht angesteuert. Der am Dämpfergehäuse 1 befestigte Magnetkörper 6, umschließt die Kolbenstange 4 mit radialem Abstand außenumfangsseitig, so dass die Kolbenstange 4 relativ zum Magnetkörpers 6 in axialer Richtung 10 frei beweglich ist.

In Fig. 6 ist die Magnetspule 5 durch die elektrische Spannungsquelle 8 angesteuert. Der Magnetkörper 6, der sich innerhalb des Magnetfelds befindet, verkürzt sich dadurch und verkleinert seinen Innendurchmesser entsprechend, wie hier dargestellt. Der Magnetkörper 6 berührt den Außenumfang der Kolbenstange 4 unter radialer Vorspannung anliegend. Dadurch wird bei axialer Hin- und Herbewegung der Kolbenstange 4 Reibung erzeugt, so dass die eingeleiteten Schwingungen bedämpft werden.

Im hier gezeigten dritten Ausführungsbeispiel weist der Magnetkörper 6, wie im zweiten Ausführungsbeispiel gemäß Figuren 3 und 4, auf der dem ersten Maschinenelement, hier der Kolbenstange 4, zugewandten Seite einen separat erzeugten Reibkörper 3 auf. Der Reibkörper 3 kann dadurch unabhängig vom Magnetkörper 6 hinsichtlich seiner Reibeigenschaften und seiner Haltbarkeit an den jeweiligen Anwendungsfall angepasst werden.

Der Magnetkörper 6 und der Reibkörper 3 sind bevorzugt stoffschlüssig miteinander verbunden und bilden dadurch die vormontierbare Einheit 7.

Der Reibkörper 3 weist auch in diesem Ausführungsbeispiel eine Elastizität auf, die im Wesentlichen der Elastizität des Magnetkörpers 6 entspricht.

Der elastisch nachgiebige Magnetkörper 6 kann in allen Ausführungsbeispielen entweder als Magnetelastomerkörper oder als Magnetschaumkörper ausgebildet sein.

## Patentansprüche

1. Schwingungsdämpfer, umfassend ein erstes Maschinenelement, einen Aktuator (2) und einen Reibkörper (3), der mit einem zweiten Maschinenelement verbunden und an das erste Maschinenelement anlegbar ist wobei der Aktuator (2) durch eine Magnetspule (5) ansteuerbar ist und wobei der Aktuator (2) und der Reibkörper (3) einstückig und materialeinheitlich ausgebildet und durch einen elastisch nachgiebigen Magnetkörper (6) gebildet sind, **dadurch gekennzeichnet, dass** der Magnetkörper (6) von der Magnetspule (5) außenumfangsseitig umschlossen ist und dass das erste Maschinenelement und/oder das zweite Maschinenelement aus einem polymeren Werkstoff bestehen.

2. Schwingungsdämpfer, umfassend ein erstes Maschinenelement, einen Aktuator (2) und einen Reibkörper (3), der mit einem zweiten Maschinenelement verbunden und an das erste Maschinenelement anlegbar ist wobei der Aktuator (2) durch eine Magnetspule (5) ansteuerbar ist und wobei der Aktuator (2) durch einen elastisch nachgiebigen Magnetkörper (6) gebildet ist, **dadurch gekennzeichnet, dass** der Magnetkörper (6) auf der dem ersten Maschinenelement zugewandten Seite von einem Reibkörper (3) umschlossen ist, dass der Magnetkörper (6) und der Reibkörper (3) von der Magnetspule (5) außenumfangsseitig umschlossen sind und dass das erste Maschinenelement und/oder das zweite Maschinenelement aus einem polymeren Werkstoff bestehen.

3. Schwingungsdämpfer nach einem der Ansprüche 1 oder 2, **dadurch gekennzeichnet, dass** das erste Maschinenelement als Dämpfergehäuse (1) oder als Kolbenstange (4) ausgebildet ist und das zweite Maschinenelement als Kolbenstange (4) oder als Dämpfergehäuse (1).

4. Schwingungsdämpfer nach einem der Ansprüche 1 oder 2, **dadurch gekennzeichnet, dass** der elastisch nachgiebige Magnetkörper (6) als Magnetelastomerkörper oder als Magnetschaumkörper ausgebildet ist.

5. Schwingungsdämpfer nach einem der Ansprüche 2 bis 4, **dadurch gekennzeichnet, dass** der Magnetkörper (6) und der Reibkörper (3) eine vormontierbare Einheit (7) bilden.

6. Schwingungsdämpfer nach einem der Ansprüche 2 bis 5, **dadurch gekennzeichnet dass** der Reibkörper (3) eine Elastizität aufweist, die im Wesentlichen der Elastizität des Magnetkörpers (6) entspricht.

7. Schwingungsdämpfer nach einem der Ansprüche 1 bis 6, **dadurch gekennzeichnet, dass** das Dämpfergehäuse (1) als Zylinderrohr ausgebildet ist.

8. Schwingungsdämpfer nach einem der Ansprüche 1 bis 7, **dadurch gekennzeichnet, dass** die Magnetspule (5), der Magnetkörper (6) und der Reibkörper (3) jeweils rotationssymmetrisch ausgebildet sind.

9. Verwendung eines Schwingungsdämpfers nach einem der Ansprüche 1 bis 8 in Waschmaschinen.

## Claims

1. Vibration damper, comprising a first machine element, an actuator (2) and a friction body (3) which is connected to a second machine element and can be brought to bear against the first machine element, the actuator (2) being activatable by means of a magnet coil (5), and the actuator (2) and friction body (3) being produced in one piece and in a materially integral manner and being formed by an elastically resilient magnet body (6), **characterized in that** the magnet body (6) is surrounded on the outer circumference by the magnet coil (5), and **in that** the first machine element and/or the second machine element consist/consists of a polymeric material.

2. Vibration damper, comprising a first machine element, an actuator (2) and a friction body (3) which is connected to a second machine element and can be brought to bear against the first machine element, the actuator (2) being activatable by a magnet coil (5), and the actuator (2) being formed by an elastically resilient magnet body (6), **characterized in that** the magnet body (6) is surrounded on the side facing the first machine element by a friction body (3), **in that** the magnet body (6) and the friction body (3) are surrounded on the outer circumference by the magnet coil (5), and **in that** the first machine element and/or the second machine element consist/consists of a polymeric material.

3. Vibration damper according to either one of Claims 1 and 2, **characterized in that** the first machine element is produced as a damper housing (1) or as a piston body (4) and the second machine element is produced as a piston body (4) or as a damper housing (1) .

4. Vibration damper according to either one of Claims 1 and 2, **characterized in that** the elastically resilient magnet body (6) is produced as a magnetic elastomer body or as a magnetic foam body.

5. Vibration damper according to one of Claims 2 to 4, **characterized in that** the magnet body (6) and the friction body (3) constitute a premountable unit (7).

6. Vibration damper according to one of Claims 2 to 5, **characterized in that** the friction body (3) has an elasticity which corresponds essentially to the elasticity of the magnet body (6).

7. Vibration damper according to one of Claims 1 to 6, **characterized in that** the damper housing (1) is produced as a cylindrical tube.

8. Vibration damper according to one of Claims 1 to 7, **characterized in that** the magnet coil (5), the magnetic body (6) and the friction body (3) are in each case of rotationally symmetrical form.

9. Use of a Vibration damper according to one of Claims 1 to 8 in washing machines.

## Revendications

1. Amortisseur d'oscillations, comprenant un premier élément de machine, un actionneur (2) et un corps de friction (3), qui est connecté à un deuxième élément de machine et qui peut être appliqué contre le premier élément de machine, l'actionneur (2) pouvant être commandé par une bobine magnétique (5) et l'actionneur (2) et le corps de friction (3) étant réalisés d'une seule pièce et venus de matière, et étant formés par un corps magnétique (6) élastiquement flexible, **caractérisé en ce que** le corps magnétique (6) est entouré du côté de la périphérie extérieure par la bobine magnétique (5) et **en ce que** le premier élément de machine et/ou le deuxième élément de machine se composent d'un matériau polymère.

2. Amortisseur d'oscillations, comprenant un premier élément de machine, un actionneur (2) et un corps de friction (3), qui est connecté à un deuxième élément de machine et qui peut être appliqué contre le premier élément de machine, l'actionneur (2) pouvant être commandé par une bobine magnétique (5) et l'actionneur (2) étant formé par un corps magnétique (6) élastiquement flexible, **caractérisé en ce que** le corps magnétique (6) est entouré du côté tourné vers le premier élément de machine par un corps de friction (3), **en ce que** le corps magnétique (6) et le corps de friction (3) sont entourés du côté de la périphérie extérieure par la bobine magnétique (5), et **en ce que** le premier élément de machine et/ou le deuxième élément de machine se composent d'un matériau polymère.

3. Amortisseur d'oscillations selon la revendication 1 ou 2, **caractérisé en ce que** le premier élément de machine est réalisé sous forme de boîtier d'amortisseur (1) ou sous forme de tige de piston (4) et le deuxième élément de machine est réalisé sous forme de tige de piston (4) ou de boîtier d'amortisseur (1).

4. Amortisseur d'oscillations selon l'une quelconque des revendications 1 ou 2, **caractérisé en ce que** le corps magnétique (6) élastiquement flexible est réalisé sous forme de corps magnétique élastomère ou sous forme de corps magnétique en mousse.

5. Amortisseur d'oscillations selon l'une quelconque des revendications 2 à 4, **caractérisé en ce que** le corps magnétique (6) et le corps de friction (3) forment une unité prémontable (7).

6. Amortisseur d'oscillations selon l'une quelconque des revendications 2 à 5, **caractérisé en ce que** le corps de friction (3) présente une élasticité qui correspond essentiellement à l'élasticité du corps magnétique (6).

7. Amortisseur d'oscillations selon l'une quelconque des revendications 1 à 6, **caractérisé en ce que** le boîtier d'amortisseur (1) est réalisé sous forme de tube cylindrique.

8. Amortisseur d'oscillations selon l'une quelconque des revendications 1 à 7, **caractérisé en ce que** la bobine magnétique (5), le corps magnétique (6) et le corps de friction (3) sont chacun réalisés avec une symétrie de révolution.

9. Utilisation d'un amortisseur d'oscillations selon l'une quelconque des revendications 1 à 8 dans des machines à laver.
